# EUROPÄISCHE PATENTSCHRIFT

(11) **EP 3 774 510 B1**
(45) Veröffentlichungstag und Bekanntmachung des Hinweises auf die Patenterteilung: **09.03.2022**
(21) Anmeldenummer: 19805562.6
(22) Anmeldetag: 11.11.2019
(51) Int. Cl.: B62K 19/40

(54) **BIKE-SENSOR-VORRICHTUNG**
BIKE SENSOR DEVICE
DISPOSITIF DE CAPTEUR DE VÉLO

(30) Priorität: 13.11.2018 DE 202018106420 U
(43) Veröffentlichungstag der Anmeldung: 17.02.2021
(73) Patentinhaber: K.W.H. Ciclosport Vertriebs GmbH, 82166 Gräfelfing (DE)
(72) Erfinder: GOLLING, Guido, 83708 Kreuth (DE); HOCHSCHORNER, Andreas, 82152 Krailling (DE)
(74) Vertreter: Wunderlich & Heim Patentanwälte Partnerschaftsgesellschaft mbB
(86) Internationale Anmeldenummer: PCT/EP2019/080852
(87) Internationale Veröffentlichungsnummer: WO 2020/099310

(56) Entgegenhaltungen:
- EP-A2- 2 546 132
- DE-A1-102016 000 498
- DE-U1-202015 007 540
- US-A1- 2008 252 038
- US-A1- 2013 228 405
- US-A1- 2013 233 126

## Beschreibung

Die Erfindung betrifft eine Bike-Sensor-Vorrichtung gemäß Oberbegriff des Anspruchs 1.

Der hier verwendete Begriff "Bike" umfasst jegliche Art von Fahrrad wie City-Bike, Mountain-Bike, E-Bike und dergleichen. Im Hinblick auf die hier beanspruchte Bike-Sensor-Vorrichtung wird berücksichtigt, dass die derzeit angebotenen Bikes vom Nutzer aus ganz speziellen Baugruppen zusammengestellt werden können. Dies betrifft sowohl die Rahmen- und Materialstruktur, die für das entsprechende Bike eingesetzt werden sollen, oder spezielle Federungseinheiten für Frontgabeln, Sattelrohr oder dergleichen.

Es ist daher bei neueren Bikes die Tendenz erkennbar, dass die Benutzer sich ihr entsprechendes Bike selbst zusammenstellen oder sogar zusammenbauen, wobei dies auch die elektronische Ausrüstung des Bikes betrifft.

Hinzu kommt, dass bei E-Bikes eine Geschwindigkeitsbegrenzung vorgegeben ist, welche nicht überschritten werden soll, da bei höheren Geschwindigkeiten das entsprechende E-Bike in eine andere Klassifizierung fallen würde und damit zum Beispiel anmelde- und versicherungspflichtig werden würde.

Die genaue Erfassung der mit einem Bike gefahrenen oder erreichbaren Geschwindigkeit, aber auch andere Daten wie zurückgelegte Gesamtstrecke oder Durchschnittsgeschwindigkeit, erlangen daher größere Bedeutung.

Die bisherige Erfassung dieser Daten erfolgt meistens von einem Impulsgeber und Erfassungsbereich über außen am Bike-Rahmen geführte Kabel zu einer Auswerteeinheit, zum Beispiel einen Radcomputer oder Kilometerzähler.

Diese Lösung passt jedoch nicht in ein optimales Bikedesign, so dass nach anderen Alternativen gesucht wird, die auch bei unterschiedlichen Rahmenstrukturen einsetzbar sind.

Die Erfindung sieht daher vor, eine Bike-Sensor-Vorrichtung, die als Set zu verstehen ist, mit einem Sensorgehäuse und darin aufgenommenen Sensor mit angeschlossenem Sensorkabel so auszustatten, dass eine Sensorhalterung zur Aufnahme und Fixierung des Sensorgehäuses am oder im Biker-Rahmen vorgesehen wird, wobei die Sensorhalterung der entsprechenden Aufnahme beziehungsweise Öffnung am oder im Bike-Rahmen angepasst wird und die Sensorhalterung mit dem Sensorgehäuse formschlüssig und/oder kraftschlüssig am beziehungsweise im Bike-Rahmen aufgenommen ist.

Die Rahmenstruktur des Bikes kann hierbei sowohl als Rohrrahmen oder als Vollmaterialrahmen ausgebildet sein.

Aus der DE 20 2015 007 540 U1 ist eine Anordnung zur Aufnahme eines Geschwindigkeitssensors im Rahmen eines Fahrrades bekannt. Die US 2013/0228405 A1 betrifft einen Hallsensor, welcher im Bereich des Bremshebels eines E-Bikes vorgesehen ist, um Informationen zu ermitteln. Aus der DE 10 2016 000 498 A1 ist die Anordnung eines Pedalkraftsensors im Rahmen des Pedals bekannt. Eine ähnliche Vorrichtung ist auch aus der US 2013/0322126 A1 bekannt.

Das erfindungsgemäße Konzept ermöglicht es, das entsprechende Sensorgehäuse mit angeschlossenem Kabel in einer im Bikerohr eingebrachten Aufnahme oder Öffnung zu verlegen oder zu führen und durch diese Öffnung das Gehäuse nach außen zu schieben, um dort an der Sensorhalterung, insbesondere einclipsbar fixiert zu werden. Sensorkabel mit Sensorgehäuse und aufgeclipster Sensorhalterung werden dann im Bikerohr zurückgezogen, bis die Kopfseite der Sensorhalterung die Öffnung der Aufnahme im Bikerohr bedeckt und abschließt.

Bevorzugt weist die Kopfseite der Sensorhalterung im oberen Bereich eine umlaufende Rinne auf, deren Breite der Stärke des Bikerohres angepasst ist, so dass die Sensorhalterung die Aufnahme beziehungsweise Öffnung im Bikerohr formschlüssig abschließt.

Das Sensorgehäuse kann zweckmäßigerweise eine längliche Hülsenstruktur aufweisen, die im mittleren Bereich einen ringförmigen Erfassungsbereich mit dahinter installiertem Sensor aufweist. Die Hülsenstruktur erlaubt es daher, die an der Sensorhalterung nach unten abstehenden Haltestege hakenförmig oder L-förmig auszulegen, so dass die Hülsenstruktur innerhalb der Haltestege fixiert wird.

Die Haltestege werden dabei bevorzugt gegeneinander versetzt über die Länge der Sensorhalterung vorgesehen und ragen mit ihren Hakenbereichen gegeneinander, so dass eine gute Fixierung des Sensorgehäuses darin erreicht wird.

An Stelle der Aufnahme und Öffnung in der Wandung des Rohrrahmens wird bei einer Ausbildung des Rahmens aus Vollmaterial eine Ausnehmung im Rahmen vorgesehen, und eine damit in Verbindung stehende relativ kurze Bohrung im Vollmaterial, so dass das Sensorgehäuse mit angeschlossenem Kabel durch die Bohrung in die Ausnehmung geschoben werden kann und dann in der aus dem Rahmen herausragenden Stellung die Sensorhalterung auf dem Sensorgehäuse aufgebracht oder aufgeclipst werden kann.

Die entsprechende Sensorhalterung mit daran fixiertem Sensorgehäuse wird dann in die Ausnehmung des Rahmens zurückgeführt und kann dann beispielsweise über eine Schraubverbindung am Rahmen festgelegt werden und die entsprechende Ausnehmung, insbesondere abdichtend, abdecken.

Vorzugsweise hat das Sensorgehäuse einen zentralen, insbesondere mittigen und ringförm igen Erfassungsbereich für den Sensor und beidseitig davon einen Fixierungsbereich, in dem die Sensorhalterung mit ihren Haltestegen das Sensorgehäuse fixieren kann.

Der Erfassungsbereich des Sensors kann auch an der vorderen Stirn- und Abschlussfläche vorgesehen sein. Die ringförmige Verstärkung am Sensorgehäuse kann vorteilhafterweise zur genauen Positionsplatzierung und Halterung des Sensors ausgebildet sein. Ebenso ist es möglich, dass sich der Erfassungsbereich im Wesentlichen über die Länge des Sensorgehäuse erstreckt.

Die Sensorhalterung, die zweckmäßigerweise insbesondere einstückig und aus einem duroplastischen oder thermoplastischen Kunststoffmaterial hergestellt ist, wird bevorzugt kopfseitig mit einer umlaufenden Rinne ausgebildet, wobei Letztere die Wandstärke der Aufnahme beziehungsweise Öffnung des Bikerohres aufnehmen kann, so dass damit ein formschlüssiger Abschluss gebildet wird und zum Beispiel keine Feuchtigkeit oder Wasser in das Innere des Bikerohres eindringen kann. Zum Inneren des Bike-Rahmens gerichtet ist die Sensorhalterung bevorzugt mit einem oder mehreren Haltestegen für die Fixierbereiche des Sensorgehäuses ausgebildet.

Die Haltestege sind vorteilhafterweise haken- oder L-förmig ausgebildet und gegenläufig zueinander angeordnet. In diesem Sinn sind an den Endbereichen der Sensorhalterung über deren Länge jeweils ein Haltesteg vorgesehen, der im unteren Bereich bogenartig geformt ist, wobei die bogenartigen oder hakenförmigen Bereiche gegeneinander gerichtet sind.

Nach dem Einsetzen des Sensorgehäuses in diese Hakenbereiche wird daher das Sensorgehäuse form- und kraftschlüssig festgelegt. Auch die Kopfseite der Sensorhalterung ist so ausgebildet, dass sie formschlüssig und insbesondere abdichtend die Ausnehmung beziehungsweise Öffnung im oder am Bike-Rahmen abdeckt und abschließt.

Die Kopfseite der Sensorhalterung ist insbesondere als längliches Oval ausgebildet und der Aufnahme beziehungsweise Öffnung im Bike-Rahmen angepasst, so dass ein Abschluss der Öffnung oder Ausnehmung erzeugt wird und in diesem Bereich keine Feuchtigkeit in den Bike-Rahmen eintreten kann.

Insbesondere bei einem Bike-Rahmen aus Vollmaterial wird die Kopfseite der Sensorhalterung plattenartig ausgebildet und mit einem Befestigungsbereich versehen. Auf diese Weise kann mittels einer Schraubbefestigung durch die Kopfseite gegen den Bike-Rahmen die zusammengeclipste Einheit von Sensorgehäuse und Sensorhalterung am Bike-Rahmen befestigt werden.

Die Sensorhalterung kann in einer einfachen Form als Klemmhalter ausgebildet sein. Hierbei wird ein bogenförmiger Bereich zur formschlüssigen Aufnahme der Rundkontur, insbesondere der mittigen ringförmigen Verstärkung des Sensors, vorgesehen. Auch ist ein Befestigungsschenkel zur Fixierung am Bikerahmen vorhanden.

Zusätzlich kann eine Drehsicherung beabstandet von der Fixierung, insbesondere in Form eines zum Beispiel zylindrischen Bolzens berücksichtigt werden, der eine Drehblockierung am Bikerahmen für Sensor und Sensorhalterung bewirkt.

Verfahrensmäßig kann daher bei dieser Bike-Sensor-Vorrichtung das Sensorgehäuse mit angeschlossenem Sensorkabel zum Beispiel durch die Rohröffnung des Bike-Rahmens geführt und durch die Ausnehmung beziehungsweise Öffnung in einem Wandabschnitt des Sensorrohres nach außen geführt und an dieser Stelle mit der Sensorhalterung verbunden beziehungsweise eingeclipst werden.

Es wird nachfolgend das Sensorgehäuse mit darauf fixierter Sensorhalterung in die Ausnehmung beziehungsweise Öffnung zurückgeführt und dort einrastend in die Wandung des Bikerohres oder zum Beispiel mittels einer Schraubbefestigung am Bikerohr festgelegt.

Die Erfindung wird nachfolgend anhand schematischer Beispiele noch näher erläutert. Es zeigen:
- Fig. 1: einen schematischen Längsschnitt durch den Bereich eines Bikerahmens, der als Rohr ausgebildet ist, in dem ein Sensorgehäuse mit Kabel eingeführt ist und in Pfeilrichtung durch eine Öffnung nach außen geführt werden kann;
- Fig. 2: die Darstellung nach Fig. 1, wobei das Sensorgehäuse nach außen geführt ist und eine Sensorhalterung in Pfeilrichtung auf dem Sensorgehäuse aufgebracht oder aufgeclipst werden kann;
- Fig. 3: einen nachfolgenden Schritt zu der Darstellung nach Fig. 2, wobei die auf dem Sensorgehäuse aufgebrachte Sensorhalterung in die Öffnung des Bike-Rahmens eingesetzt wird und in Pfeilrichtung so eingedrückt werden kann, dass die Wandung des Rohres in einer kopfseitigen Rinne der Sensorhalterung zu liegen kommt;
- Fig. 4: die Baugruppen der Bike-Sensor-Vorrichtung mit Sensorgehäuse und Sensorkabel mit darüber angeordneter Sensorhalterung und eine kopfseitige Ansicht der Sensorhalterung von oben mit einer Befestigungsschraube;
- Fig. 5: der Einführvorgang des Sensorgehäuses mit Kabel in ein Bikerohr aus Vollmaterial mit darin vorgesehener Aufnahme und einen Verlegekanal;
- Fig. 6: die Darstellung nach Fig. 5 in der Phase, in der das Sensorgehäuse nach außen geführt ist und kurz vor der Zusammenführung und Befestigung mit der Sensorhalterung gezeigt ist;
- Fig. 7: die Endphase des Zusammenbaus des Sets der Bike-Sensor-Vorrichtung, wobei die Sensorhalterung mit Sensorgehäuse in der Ausnehmung platziert ist und kopfseitig mit einer Schraubverbindung im Bike-Rahmen festgelegt wird; und
- Fig. 8: eine vereinfachte bruchstückartige Darstellung eines hinteren Rahmenbereichs eines Bikes mit Reifen und Speichen sowie angebrachtem Magneten zur Impulserzeugung beim Vorbeiführen an einer am Bike-Rahmen befestigten Sensorhalterung auf dem Rotationskreis, der mit unterbrochenen Strichen dargestellt ist.

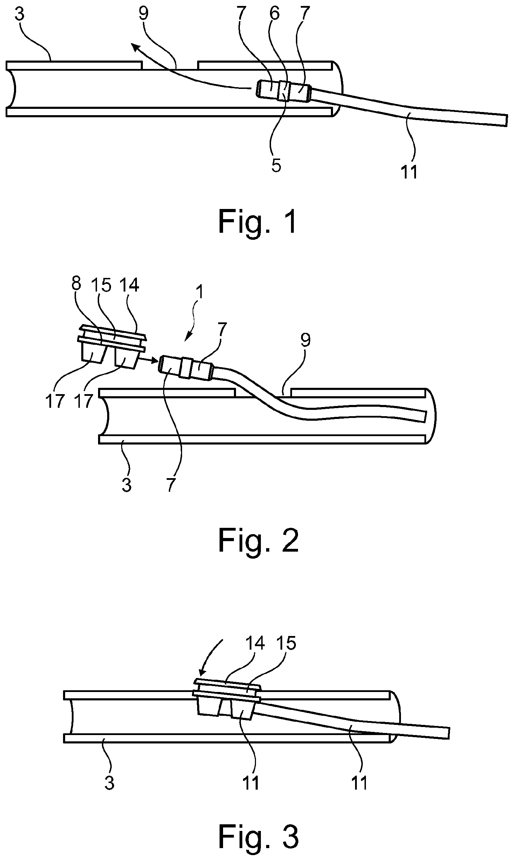

In Fig. 1 ist schematisch ein Bike-Rahmen 3, der als Rohr ausgebildet ist, dargestellt und ein erster Verfahrensschritt zur Montage und Festlegung des Sensorgehäuses 5 mit Kabel 11 im Bike-Rahmen 3 gezeigt.

Der im Längsschnitt dargestellte Bike-Rahmen 3 weist im Beispiel in der oberen Rohrwandung eine Aufnahme 9 als Öffnung auf, durch die das Sensorgehäuse 5 nach außerhalb des Rahmens geführt ist und wie in Fig. 2 gezeigt, mit einer Sensorhalterung 8 verknüpft und festgelegt werden kann.

Das Sensorgehäuse 5 ist als längliche Hülse, insbesondere in Art eines Zylinders und aus einem Kunststoffmaterial hergestellt und weist im mittleren Bereich einen ringförmigen Erfassungsbereich 6 auf, hinter dem der eigentliche Sensor zur Erfassung magnetischer Impulse oder Signale platziert ist.

Beidseitig vom Erfassungsbereich 6 sind etwas durchmesserkleinere Fixierbereiche 7 vorgesehen.

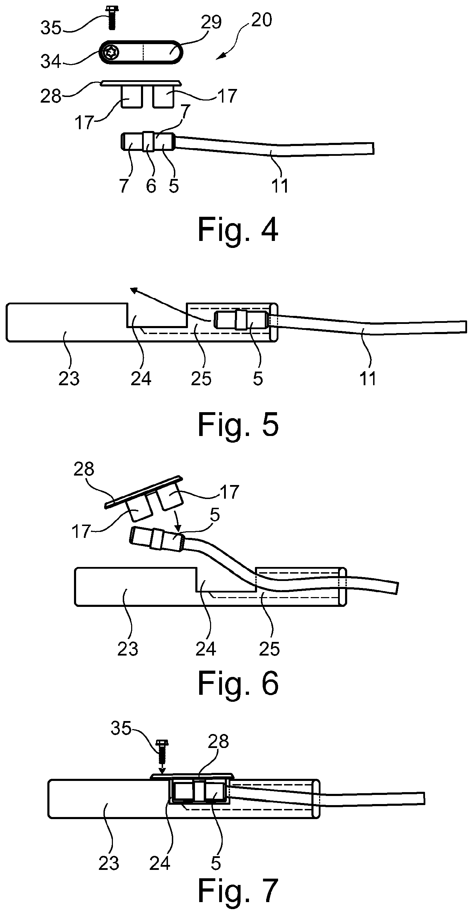

Das Sensorgehäuse 5 mit Kabel 11 wird in Pfeilrichtung durch die Aufnahme 9 des Bike-Rahmens 3 nach außen geführt. Dort wird, wie in Fig. 2 gezeigt, die Halteeinrichtung 8 in Pfeilrichtung auf das Sensorgehäuse 5 aufgeschoben oder form- und kraftschlüssig, wie in Fig. 6 gezeigt, auf die Fixierbereiche 7 aufgeclipst.

Die bevorzugt einstückig und aus einem Kunststoffmaterial, insbesondere thermoplastischen Kunststoff, hergestellte Sensorhalterung 8 weist eine plattenartige Kopfseite 14 auf, an die sich nach unten eine umlaufende Rinne 15 anschließt. Die Rinne 15 wird nach unten durch einen umlaufenden Rand abgeschlossen, der ebenso wie die Kopfseite 14 eine geringfügig größere Abmessung, insbesondere in Art eines Ovals, aufweist und im eingesetzten Zustand in die Aufnahme 9 diese abdichtend abschließt.

Die Sensorhalterung 8 hat, wie in Fig. 2 gezeigt, zwei nach unten gerichtete Haltestege 17. Diese Haltestege 17 sind der Außenkontur des Sensorgehäuses 5 angepasst und insbesondere hakenartig oder L-förmig ausgebildet.

Die zwei Haltestege 17 sind bevorzugt jeweils am entgegengesetzten Endbereich der Sensorhalterung auf unterschiedlichen Außenseiten und mit ihrer Hakenöffnung entgegengesetzt vorgesehen.

Mit dieser Ausgestaltung ist es möglich, die Sensorhalterung 8 entweder wie in Fig. 2 gezeigt in Längsrichtung des Sensorgehäuses aufzuschieben, so dass der Erfassungsbereich 6 im Zwischenspalt zwischen den beiden Haltestegen 17 zu liegen kommt.

Die Haltestege 17 können aber trotz ihrer Hakenausbildung im unteren Bereich derart beschaffen sein, dass die gesamte Sensorhalterung 8 auf das Sensorgehäuse 5 aufgeclipst werden kann und eine stabile Fixierung zwischen dem Sensorgehäuse 5 und der Sensorhalterung 8 damit erzeugt wird.

In einem dritten Montageschritt wird die derart gekoppelte Einheit aus Sensorgehäuse 5 und Sensorhalterung 8 in die Aufnahme 9 zurückgeführt. Dies kann, wie in Fig. 3 gezeigt, in der Art realisiert werden, dass zunächst die Rinne 15 an einem Endbereich der Sensorhalterung mit der Wandstärke der Öffnung 9 in Verbindung gebracht wird und nachfolgend die gesamte Sensorhalterung 8 beispielsweise kraftschlüssig entsprechend der Pfeilrichtung von der Kopfseite 14 in die Öffnung 9 eingedrückt wird und diese sicher abschließt.

Auf diese Weise ist eine stabile und sichere Fixierung des Sensorgehäuses im Bike-Rahmen 3 gewährleistet und eine Abdichtung zum Inneren des Bike-Rahmens 3 oder einer Ausnehmung 24 (Figuren 6, 7) erreicht.

In Fig. 4 ist schematisch eine etwas abgewandelte Alternative zur Bike-Sensor-Vorrichtung 1 nach den Figuren 1 bis 3 dargestellt. Das Set 20 nach Fig. 4 aus Sensorgehäuse 5 mit Kabel 11 und einer Sensorhalterung 28 weist auf die Kopfseite 29 gesehen, eine längliche Ovalkontur auf. Nach unten gerichtet hat die Sensorhalterung 28 ebenfalls zwei Haltestege 17, die form- und/oder kraftschlüssig auf die Fixierbereiche 7 des Sensorgehäuses 5 aufgebracht werden können.

Das in Fig. 4 gezeigte Set 20 der Bike-Sensor-Vorrichtung 1 ist speziell für Bike-Rahmen 23 aus einem Vollmaterial, insbesondere Aluminium, vorgesehen. Im Bike-Rahmen 23 aus Vollmaterial wird hierzu eine Ausnehmung 24 vorbereitet, die mit einem zum Beispiel bohrtechnisch eingebrachten Kanal 25, durch den das Sensorgehäuse 5 mit Kabel 11 geschoben werden kann, in Verbindung steht.

Entsprechend Fig. 5 kann somit das Sensorgehäuse 5 mit Kabel 11 durch den Kanal 25 und die Ausnehmung 24 in Pfeilrichtung geführt und nach außen geschoben werden.

Der weitere Montageschritt zur Befestigung des Sets 20 im Bike-Rahmen 23 ist in Figuren 6 und 7 dargestellt.

Gemäß Fig. 6 wird die Sensorhalterung 28 mit ihren Haltestegen 17 auf das Sensorgehäuse aufgebracht, zum Beispiel in Pfeilrichtung aufgeclipst. Nachfolgend wird dann das in die Ausnehmung 24 eingesetzte Set 20 aus Sensorgehäuse 5 und Sensorhalterung 28 beispielsweise über eine Schraubverbindung 35 durch die Kopfseite 29 im Bike-Rahmen 23 befestigt, so dass eine genaue Platzierung des im Sensorgehäuse 5 vorhandenen Sensors und eine Abdichtung der Ausnehmung 24 erreicht wird.

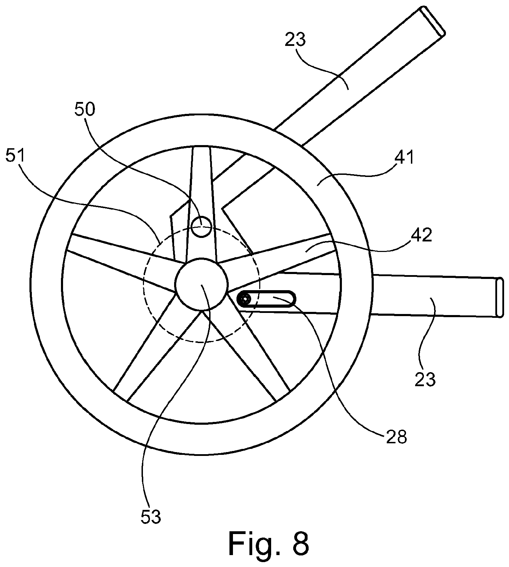

Die präzise Fixierung des Sensors im Rahmen des Sets 20 am Bike-Rahmen 23 ist, wie in Fig. 8 schematisch gezeigt, erforderlich, damit der durch einen Magneten 50 bei einer Drehung des Rades 41 erzeugte magnetische Puls beziehungsweise des magnetischen Feldes genau erfasst werden kann.

Die vereinfachte Darstellung nach Fig. 8 zeigt den hinteren Bereich eines Bike-Rahmens 23 mit Nabenbereich 53 und einem mit Speichen 42 aufweisenden Bike-Rad 41. Ein Magnet 50 ist im Beispiel an einer Speiche 42 befestigt und beschreibt bei einer Rotation des Bike-Rades 41 einen Laufkreis 51, der in Fahrt durch den Erfassungsbereich 6 (Fig. 1) der Bike-Sensor-Vorrichtung 1 geführt ist.

Der bei einer Drehung des Bike-Rades 41 im Sensor erfasste magnetische Impuls beziehungsweise das magnetische Feld, wird signalmäßig über das Sensorkabel 11 zu einer Auswerteeinheit wie einem Bike-Computer geführt, so dass darüber die Strecke des Bike-Rades bei einer Umdrehung aber auch bei einer Vielzahl von Umdrehungen ermittelt und auch weitere Parameter wie Geschwindigkeit und Gesamtstrecke und dergleichen, berechnet werden kann.

Die beanspruchte Bike-Sensor-Vorrichtung 1 eignet sich daher insbesondere für eine Nachrüstung eines entsprechenden Bikes, wobei eine Selbstmontage in relativ einfacher Weise zu realisieren ist.

In Kombination mit einer Auswerteeinheit wie einem Bike-Computer kann dabei auch die gefahrene Geschwindigkeit genau berechnet und abgespeichert werden.

## Patentansprüche

1. Bike-Sensor-Vorrichtung (1) mit
einem Sensorgehäuse (5) und damit verbundenem Sensorkabel (11),
einer Sensorhalterung (8) zur Fixierung des Sensorgehäuses (5) am oder im Bike-Rahmen (3, 23)),
wobei die Sensorhalterung (8) einer Aufnahme (9) oder Öffnung am/im Bike-Rahmen (3, 23) angepasst ist, und
wobei die Sensorhalterung (8) mit dem Sensorgehäuse (5) form- und/oder kraftschlüssig am/im Bike-Rahmen (3, 23) aufgenommen ist
**dadurch gekennzeichnet,**
**dass** die Sensorhalterung (8) kopfseitig (14) in die Aufnahme (9) oder Öffnung des Bike-Rahmens (3, 23) einsetzbar ist, und zum Inneren des Bike-Rahmens (3, 23) gerichtet mindestens einen oder mehrere Haltestege (17) für Fixierungsbereiche (7) des Sensorgehäuses (5) aufweist.

2. Bike-Sensor-Vorrichtung nach Anspruch 1,
**dadurch gekennzeichnet,**
**dass** das Sensorgehäuse (5) einen zentralen, insbesondere ringförmigen Erfassungsbereich (6) und beidseitig davon einen Fixierungsbereich (7) für die Sensorhalterung (8) aufweist.

3. Bike-Sensor-Vorrichtung nach Anspruch 1 oder 2,
**dadurch gekennzeichnet,**
**dass** die Sensorhalterung (8) kopfseitig (14) mit umlaufender Rinne (15) in die Aufnahme (9) oder Öffnung des Bike-Rahmens (3, 23) einsetzbar ist.

4. Bike-Sensor-Vorrichtung nach einem der Ansprüche 1 bis 3,
**dadurch gekennzeichnet,**
**dass** die Sensorhalterung (8) einstückig aus Kunststoff, insbesondere einem duroplastischen oder thermoplastischen Kunststoff, ausgebildet ist.

5. Bike-Sensor-Vorrichtung nach einem der Ansprüche 1 bis 4,
**dadurch gekennzeichnet,**
**dass** die Haltestege (17) haken- oder L-förmig ausgebildet und gegenläufig zur Fixierung des Sensorgehäuses (5) an der Sensorhalterung (8) angeordnet sind.

6. Bike-Sensor-Vorrichtung nach einem der Ansprüche 1 bis 5,
**dadurch gekennzeichnet,**
**dass** die Kopfseite (14) der Sensorhalterung (8) formschlüssig und insbesondere abdichtend in einer Ausnehmung (9) oder Öffnung im/am Bike-Rahmen (3, 23) aufnehmbar ist.

7. Bike-Sensor-Vorrichtung nach einem der Ansprüche 1 bis 6,
**dadurch gekennzeichnet,**
**dass** die Kopfseite (14, 29) der Sensorhalterung (8, 28) als Aufnahme (24) oder Öffnung (9) überdeckendes, insbesondere längliches Oval ausgebildet ist.

8. Bike-Sensor-Vorrichtung nach einem der Ansprüche 1 bis 7,
**dadurch gekennzeichnet,**
**dass** die Kopfseite (28) plattenartig und mit einem Befestigungsbereich (34) am Bike-Rahmen (23) ausgebildet ist.

9. Bike-Sensor-Vorrichtung nach einem der Ansprüche 1 bis 8,
**dadurch gekennzeichnet,**
**dass** die Sensorhalterung (8) zum Einsetzen in einen als Rohrrahmen oder als Vollmaterial-Rahmen (23) ausgebildeten Bike-Rahmen (3, 23) ausgebildet ist.

## Claims

1. Bike sensor device (1) having
a sensor housing (5) and a sensor cable (11) connected thereto,
a sensor mount (8) to fix the sensor housing (5) on or in the bike frame (3, 23),
wherein the sensor mount (8) is adapted to a receptacle (9) or opening on/in the bike frame (3, 23), and
wherein the sensor mount (8), together with the sensor housing (5), is received in a form- and/or force-locking manner on/in the bike frame (3, 23),
**characterized in that**
the sensor mount (8) can be inserted at the head side (14) into the receptacle (9) or opening of the bike frame (3, 23) and, directed towards the interior of the bike frame (3, 23), has at least one or several retaining webs (17) for fixing regions (7) of the sensor housing (5).

2. Bike sensor device according to claim 1,
**characterized in that**
the sensor housing (5) has a central, in particular ring-shaped detection region (6) and, on both sides thereof, a fixing region (7) for the sensor mount (8).

3. Bike sensor device according to claim 1 or 2,
**characterized in that**
the sensor mount (8) can be inserted at the head side (14) with circumferential groove (15) into the receptacle (9) or opening of the bike frame (3, 23).

4. Bike sensor device according to any one of claims 1 to 3, **characterized in that**
the sensor mount (8) is designed in one piece of plastic, in particular a thermosetting or thermoplastic resin.

5. Bike sensor device according to any one of claims 1 to 4, **characterized in that**
the retaining webs (17) are of hook- or L-shaped design and arranged in an opposed manner in order to fix the sensor housing (5) on the sensor mount (8).

6. Bike sensor device according to any one of claims 1 to 5, **characterized in that**
the head side (14) of the sensor mount (8) can be received in a form-locking manner and in particular in a sealing manner in a recess (9) or opening in/on the bike frame (3, 23).

7. Bike sensor device according to any one of claims 1 to 6, **characterized in that**
the head side (14, 29) of the sensor mount (8, 28) is designed in particular as an elongated oval covering the receptacle (24) or opening (9).

8. Bike sensor device according to any one of claims 1 to 7, **characterized in that**
the head side (29) is plate-like and designed with a fastening region (34) on the bike frame (23).

9. Bike sensor device according to any one of claims 1 to 8, **characterized in that**
the sensor mount (8) is designed for insertion into a bike frame (3, 23) designed as tubular frame or as solid material frame (23).

## Revendications

1. Dispositif de capteur de vélo (1) avec
un boîtier de capteur (5) et un câble de capteur (11) relié à celui-ci et
un support de capteur (8) pour fixer le boîtier de capteur (5) sur ou dans le cadre de vélo (3, 23),
dans lequel le support de capteur (8) est adapté à un logement (9) ou un orifice sur/dans le cadre de vélo (3, 23), et
dans lequel le support de capteur (8) est logé avec le boîtier de capteur (5) par emboîtement et/ou par adhérence sur/dans le cadre de vélo (3, 23),
**caractérisé en ce que**
le support de capteur (8) peut être inséré du côté tête (14) dans le logement (9) ou l'orifice du cadre de vélo (3, 23), et présente, orientée vers l'intérieur du cadre de vélo (3, 23) au moins une ou plusieurs barrettes de retenue (17) pour les zones de fixation (7) du boîtier de capteur (5).

2. Dispositif de capteur de vélo selon la revendication 1,
**caractérisé en ce que**
le boîtier de capteur (5) présente une zone de détection (6) centrale, en particulier annulaire, et de part et d'autre de celle-ci une zone de fixation (7) pour le support de capteur (8).

3. Dispositif de capteur de vélo selon la revendication 1 ou 2,
**caractérisé en ce que**
le support de capteur (8) peut être inséré du côté tête (14) avec une rainure périphérique (15) dans le logement (9) ou l'orifice du cadre de vélo (3, 23).

4. Dispositif de capteur de vélo selon une des revendications 1 à 3,
**caractérisé en ce que**
le support de capteur (8) est formé d'une pièce en plastique, en particulier un plastique thermodurcissable ou thermoplastique.

5. Dispositif de capteur de vélo selon une des revendications 1 à 4,
**caractérisé en ce que**
les barrettes de retenue (17) sont configurées en forme de crochet ou de L et disposées dans le sens opposé à la fixation du boîtier de capteur (5) sur le support de capteur (8).

6. Dispositif de capteur de vélo selon une des revendications 1 à 5,
**caractérisé en ce que**
le côté tête (14) du support de capteur (8) peut être logé par emboîtement et en particulier de façon étanche dans un logement (9) ou un orifice dans/sur le cadre de vélo (3, 23).

7. Dispositif de capteur de vélo selon une des revendications 1 à 6,
**caractérisé en ce que**
le côté tête (14, 29) du support de capteur (8, 28) est configuré comme un ovale en particulier oblong recouvrant le logement (24) ou l'orifice (9).

8. Dispositif de capteur de vélo selon une des revendications 1 à 7,
**caractérisé en ce que**
le côté tête (28) est en forme de plaque et configuré avec une zone de fixation (34) sur le cadre de vélo (23).

9. Dispositif de capteur de vélo selon une des revendications 1 à 8,
**caractérisé en ce que**
le support de capteur (8) est conçu pour être inséré dans un cadre de vélo (3, 23) configuré comme un cadre tubulaire ou comme un cadre en matériau massif (23).
